Europäisches Patentamt

European Patent Office

Office européen des brevets

(19)

(11) **EP 0 662 058 B1**

(12) **EUROPÄISCHE PATENTSCHRIFT**

(45) Veröffentlichungstag und Bekanntmachung des Hinweises auf die Patenterteilung:
**29.12.1997 Patentblatt 1997/52**

(21) Anmeldenummer: 93919308.2

(22) Anmeldetag: **09.09.1993**

(51) Int. Cl.$^6$: **B60T 8/40**, B60T 13/20

(86) Internationale Anmeldenummer:
**PCT/EP93/02438**

(87) Internationale Veröffentlichungsnummer:
**WO 94/07718** (14.04.1994 Gazette 1994/09)

(54) **BREMSANLAGE MIT BLOCKIERSCHUTZ- UND ANTRIEBSSCHLUPFREGELUNG UND HYDRAULIKPUMPENSTEUERUNG**

BRAKE SYSTEM WITH ANTILOCK PROTECTION AND TRACTION CONTROL AND HYDRAULIC PUMP CONTROL

SYSTEME DE FREINAGE AVEC DISPOSITIF ANTIBLOCAGE ET ANTIPATINAGE ET REGLAGE DE LA POMPE HYDRAULIQUE

(84) Benannte Vertragsstaaten:
**DE FR GB**

(30) Priorität: **25.09.1992 DE 4232132**

(43) Veröffentlichungstag der Anmeldung:
**12.07.1995 Patentblatt 1995/28**

(73) Patentinhaber:
**ITT Automotive Europe GmbH**
**60488 Frankfurt am Main (DE)**

(72) Erfinder:
• **KOLBE, Alexander**
**D-64846 Gross Zimmern (DE)**

• **SOMMER, Thomas**
**D-60316 Frankfurt am Main (DE)**

(74) Vertreter:
**Blum, Klaus-Dieter, Dipl.-Ing.**
**c/o ITT Automotive Europe GmbH**
**Guerickestrasse 7**
**60486 Frankfurt (DE)**

(56) Entgegenhaltungen:
**EP-A- 0 313 292**      **EP-A- 0 325 291**
**EP-A- 0 486 819**      **DE-A- 4 032 876**
**DE-A- 4 110 494**      **DE-C- 3 241 039**

EP 0 662 058 B1

**Beschreibung**

Die Erfindung bezieht sich auf eine hydraulische Bremsanlage mit Blockierschutzregelung, im folgenden ABS genannt, und Antriebsschlupfregelung durch Bremseneingriff im folgenden BASR genannt, die eine elektromotorisch angetriebene Hydraulikpumpe zur Hilfsdruckversorgung im ABS- und BASR-Modus besitzt, mit Sensoren zur Ermittlung des Raddrehverhaltens und mit einer elektronischen Schaltung zur Auswertung der Sensosignale und zur Erzeugung von Bremsdruck- und Hilfsdrucksteuersignalen.

Bekannte hydraulische Bremsanlagen dieser Art (DE 36 24 722 A1, DE 36 27 566 A1) sind mit einer Hydraulikpumpe ausgerüstet, die sowohl den während einem Blockierschutzregelung (im "ABS-Modus") benötigten Hilfs-druck als auch den Bremsdruck zur Bremsenbetätigung während einer Antriebsschlupfregelung ("BASR-Modus") liefert. Die Hydraulikpumpe ist ein oder mehrkreisig ausgebildet und wird mit Hilfe eines Elektromotors angetrieben, der beim Einsetzen der Regelung eingeschaltet wird. Der Verbrauch an hydraulischer Energie ist je nach Regelungsvorgang und Regelungsphase sehr unterschiedlich. Die Nennleistung des Motor-Pumpen-Aggregats richtet sich natürlich nach dem Höchstbedarf, der in bestimmten, seltenen Situationen auftreten kann. Zur Antriebsschlupfregelung durch Bremseneingriff (BASR), bei der die Pumpe den Druck zur Betätigung der Bremse liefern muß, wird grundsätzlich ein im Vergleich zu einer Blockierschutzregelung wesentlich geringerer hydraulischer Druck und eine entsprechend geringere Energie benötigt. Obwohl zur Antriebsschlupfregelung ein schwächeres Motor-Pumpen-Aggregat genügen würde, wird aus Kostengründen dasselbe Aggregat für den ABS- und BASR-Betrieb verwendet.

Beim Einsetzen der Regelung entstehende, durch das Einschalten und den Betrieb der Hydraulikpumpe verursachte Geräusche werden insbesondere während einer Antriebsschlupfregelung als störend empfunden; beim ABS-Betrieb sind meist andere Geräusche überlagert, so daß die Pumpengeräusche weniger ins Gewicht fallen. Es ist auch bereits bekannt, die störenden Geräusche durch Reduzieren der Pumpen- bzw. Motordrehzahl, die proportional zur Förderleistung der Pumpe ist, zu verringern (DE 40 32 876 A1). Es wurde daher schon vorgeschlagen, durch Einfügen eines Vorwiderstandes im Ansteuerweg der Motorpumpe die Förderleistung der Pumpe in BASR-Betrieb , in dem grundsätzlich eine geringere Leistung als im ABS-Betrieb erforderlich ist, zu reduzieren (DE 41 10 494 A1, veröffentlicht am 01.10.1992). Allerdings muß sich auch in diesem Fall die Pumpenleistung nach der im BASR-Betrieb benötigten Maximalleistung richten. Die Förderleistung und damit die Geräuschentwicklung sind also immer noch in den meisten Situationen wesentlich höher als an sich erforderlich. Eine bessere Anpassung an den tatsächlichen Förderleistungsbedarf wäre folglich wünschenswert.

Der Erfindung liegt daher die Aufgabe zugrunde, auf einfache Weise, mit geringem Aufwand und ohne jegliche Einbuße an Sicherheit die Förderleistung der Pumpe im BASR-Betrieb auf den tatsächlich in der jeweiligen Situation benötigten Wert zu beschränken. Auf diese Weise soll das Entstehen störender Geräusche auf ein Minimum reduziert werden. Für den Verschleiß bzw. die Haltbarkeit der Pumpe wäre die Beschränkung auf den tatsächlichen Bedarf ebenfalls von Vorteil. Eine Einschränkung der Funktionssicherheit oder der Leistungsfähigkeit der BASR-Regelung sollte natürlich unbedingt vermieden werden.

Es hat sich herausgestellt, daß diese Aufgabe durch die im Anspruch 1 beschriebene Weiterbildung der eingangs genannten Bremsanlage gelöst werden kann, deren Besonderheit darin besteht, daß die Hydraulikpumpe im BASR-Modus zumindest zeitweise - anfangs und in bestimmten Situationen ist eine permanent Ansteuerung vorgesehen - durch eine Pulsfolge angesteuert wird, daß durch Modulation der Pulsfolge die Förderleistung der Pumpe dem Bedarf in der jeweiligen Situation und unter den jeweiligen Bedingungen angepaßt wird und daß der Be darf durch Auswertung des Antriebsschlupfes der angetriebenen Räder und der momentanen Drehzahl der Hydraulikpumpe ermittelt wird. Zweckmäßigerweise wird das Überschreiten von vorgegebenen Antriebsschlupfschwellen festgestellt und als Maß für den Bedarf an Pumpen-Förderleistung ausgewertet. Die Informationen über den Radschlupf werden ohnehin zur ABS- und BASR-Regelung benötigt, so daß diese Art der Bedarfsermittlung ohne oder höchstens mit geringem Mehraufwand verwirklicht werden kann.

Zur Ansteuerung des Pumpenmotors werden nach einer vorteilhaften Ausführungsart der Erfindung mehrere Pulsraster in Form von Pulsfolgen mit vorgegebenen Pulsdauer- und Pulspausenzeiten gebildet, und es wird der Pumpenmotor in Abhängigkeit von dem ermittelten aktuellen Bedarf bzw. von dem Überschreiten von Schlupf- und prnpenmotordrehzahl-Schwellwerten mit einem bestimmten Pulsraster angesteuert. Alternativ könnte auch eine kontinuierliche Änderung der Pulsdauer- und Pulspausenzeiten der Ansteuer-Pulsfolge in Abhängigkeit von den Meßwerten zur Anwendung kommen, wenn dies aus speziellen Gründen für besondere Anwendungsfälle von Vorteil wäre.

Nach einer weiteren Ausführungsart der Erfindung wird der Antriebsschlupf durch Vergleich der Geschwindigkeit der angetriebenen Räder mit der Fahrzeuggeschwindigkeit oder einer Fahrzeugreferenzgeschwindigkeit ermittelt und radindividuell mit zwei vorgegebenen Schlupfschwellen verglichen. Diese Schlupfschwellen und ein Motordrehzahl-Schwellwert dienen zur Festlegung des jeweiligen Pumpenansteuerungs-Pulsrasters, wobei das Überschreiten der Schlupfschwellen und das Erreichen der Drehzahlschwelle in Abhängigkeit von der Pumpenansteuerung ausgewertet werden.

Eine noch andere Ausführungsart der Erfindung besteht darin, daß die Reaktion der Motordrehzahl auf die Pumpenansteuerung oder auf eine Änderung des Ansteuer-Pulsrasters ermittelt und zur Anpassung des Pulsrasters an den jeweiligen Bedarf und/oder zur Überwachung und Fehlererkennung ausgewertet wird. Bleibt beispielsweise die Motordrehzahl trotz Ansteuerung der Pumpe mit einem Raster, das zu einer relativ hohen Förderleistung führt, oder gar bei permanenter Einschaltung der Pumpe unter dem Drehzahl-Schwellwert, ist dies ein Indiz für das Vorliegen eines Fehlers; das Vorliegen eines Fehlers wird dann zweckmäßigerweise signalisiert und die Regelung abgeschaltet

In den Unteransprüchen sind noch weitere Ausführungsbeispiele der Erfindung beschrieben.

Weitere Merkmale, Vorteile und Anwendungsmöglichkeiten der Erfindung gehen aus der folgenden Schilderung weiterer Details anhand der beigefügten Abbildungen hervor.

Es zeigen

Fig. 1 in schematischer Darstellung die wichtigsten Komponenten einer Bremsanlage mit Blokkierschutz- und Antriebsschlupfregelung,

Fig. 2 ein Blockschaltbild zur Erläuterung einer Schattungsanordnung für die Bremsanlag nach der Erfindung,

Fig. 3 in gleicher Darstellungsweise wie Figur 2 weitere Details einer Schaltungsanordnung für die Bremsanlage nach der Erfindung und

Fig. 4 Kennlinien zur Erläuterung der Erfindung.

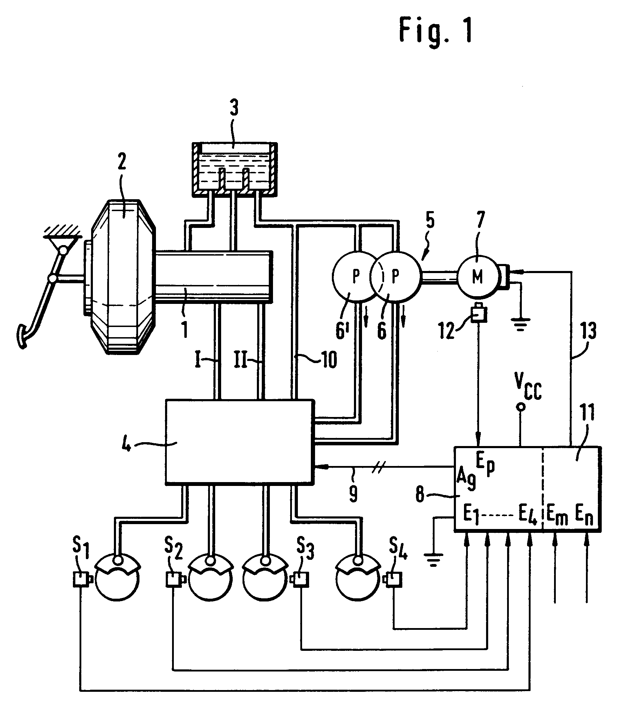

Die Bremsanlage nach Figur 1 besteht im wesentlichen aus einem Tandem-Hauptzylinder 1 mit einem vorgeschaltetem Bremskraftverstärker 2, aus einem Druckausgleichs- und Vorratsbehälter 3 und aus einem Druckmodulator 4. Außerdem sind zur Hilfsdruckerzeugung ein Motorpumpenaggregat 5 mit einer Hydraulikpumpe 6 und mit einem elektrischen Antriebsmotor 7 vorhanden. Der Hauptzylinder 1 hat zwei hydraulisch getrennte Bremskreise I, II, an die zweckmäßigerweise die Radbremsen über (nicht gezeigte) Hydraulikventile in diagonaler Aufteilung oder Schwarz/Weiß-Aufteilung angeschlossen sind. Zur Hilfsdruckversorgung sind ein Motorpumpenaggregat 5 mit einer zweikreisigen Hydraulikpumpe 6,6' und mit einem gemeinsamen elektrischen Antriebsmotor 7 vorhanden. Die hy draulische Trennung der Bremskreise I, II wird also auch bei der Hilfsdruckversorgung aufrechterhalten; die Pumpe 6 ist dem Bremskreis I, die Pumpe 6' dem Bremskreis II zugeordnet.

Es handelt sich bei dem dargestellten Ausführungsbeispiel der Erfindung um ein sogenanntes "offenes" System, bei dem das in der Druckabbauphase aus den Radbremsen abgeleitete Druckmittel über eine Rückflußleitung 10 in den Behälter 3 der Bremsanlage, an den auch die Saugseiten der Pumpen 6,6' angeschlossen sind, zurückfließt. Bei einem "geschlossenen" System, für das die Erfindung gleichermaßen gilt, wird mit den Hydraulikpumpen das aus den Radbremsen abgeleitete Druckmittel unmittelbar in den zugehörigen Bremskreis oder in den Hauptzylinder der Bremsanlage zurückgefördert. Bremsanlagen mit offenen und geschlossenen hydraulischen Systemen sind in vielfältiger Ausbildung bekannt, weshalb es sich hier erübrigt, auf weitere Details einzugehen.

Zu der Bremsanlage nach Figur 1 gehört ein elektronischer Regler 8, der vor allem die Aufgabe hat, die mit Hilfe von Radsensoren $S_1$ bis $S_4$ gewonnenen Informationen über das Drehverhalten der einzelnen Fahrzeugräder auszuwerten und Bremsdrucksteuersignale zu erzeugen. Diese Bremsdrucksteuersignale werden über einen Ausgang $A_9$ dem Bremsdruckmodulator 4 zugeführt. Symbolisch dargestellt ist in Figur 1 eine Mehrfachleitung 9, über die rad- oder bremskreisindividuelle Einlaß- und Auslaßventile, die Bestandteil des Modulator 4 sind, angesteuert werden. Üblicherweise werden elektromagnetisch betätigbare Mehrwegeventile verwendet, die je nach Regelphase den Bremsdruck in den Radbremsen konstanthalten, abbauen und wieder erhöhen. In BASR-Modus wird mit diesen Magnetventilen zunächst der Druckmittelweg von den Radbremsen zu dem Hauptzylinder 1 gesperrt und dann mit Hilfe der Hydraulikpumpen 6,6' der benötigte Bremsdruck aufgebaut und über die Magnetventile des Druckmodulators 4 zu den Antriebsrädern weitergeleitet. Die Regelung des Antriebsschlupfes geschieht mit Hilfe der Einlaß- und Auslaßventilen, die auch zur ABS-Regelung dienen.

$V_{CC}$ symbolisiert den Anschluß des Reglers 8 und - über diesen Regler - des Pumpenmotors 7 an die elektrische Stromversorgung. Die Komponenten der erfindungsgemäßen Schaltungsanordnung, die zur Ansteuerung des Pumpenmotors 7 und zur Anpassung der Pumpen-Förderleistung dienen, sind als Bestandteil des Reglers 8, symbolisch dargestellt durch die gestrichelt abgegrenzte Einheit 11, ausgebildet. Ein Drehzahlsensor 12 signalisiert dem Regler 8 über dessen Eingang $E_p$ das Drehverhalten des Pumpenmotors 7; nach einem vorteilhaften Ausführungsbeispiel genügt die Information, ob die Pumpendrehzahl über oder unter einem vorgegebenen Drehzahl-Schwellwert liegt.

Die Eingänge $E_m$, $E_n$ sind zum Anschluß weiterer Sensoren, Überwachungseinrichtungen und dergleichen vorgesehen, die ebenfalls die Ansteuerung des Pumpenmotors 7 beeinflussen. Beispielsweise könnte an den Eingang $E_m$ eine Batteriespannungs-Überwachung angeschlossen sein, um aus Sicherheitsgründen bei relativ geringer Batteriespannung den Motor 7 permanent einzuschalten.

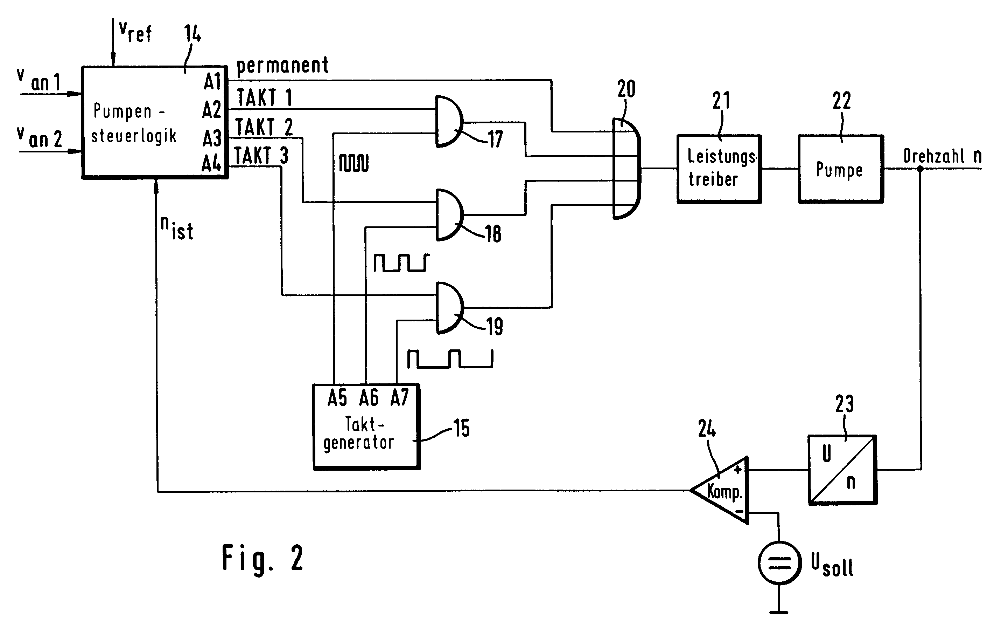

Zum Verständnis des Grundprinzips der erfindungsgemäßen Bremsanlage dient Figur 2. In einer Pumpensteuerlogik 14, die durch eine festverdrahtete Schaltung oder durch einen programmgesteuerten Schaltkreis, z.B. Mikrocomputer, verwirklicht werden kann, werden in Abhängigkeit von dem Antriebsschlupf und der Pumpendrehzahl Pulsraster erzeugt. Der Antriebsschlupf wird hierbei radindividuell durch Vergleich der Geschwindigkeit eines angetriebenen Rades $v_{an1}$, $v_{an2}$ mit der Fahrzeuggeschwindigkeit oder der Fahrzeugreferenzgeschwindigkeit $v_{ref}$ ermittelt. Über einen weiteren Eingang $n_{ist}$ erhält die Logik 14 die Information, ob die Drehzahl der Pumpe über oder unter dem vorgegebenen Schwellwert liegt. Natürlich ist es bei Bedarf auch möglich, mehrere Pumpendrehzahl-Schwellwerte zu definieren.

In Abhängigkeit von diesen Eingangsgrößen gibt die Logik 14 über ihre Ausgänge A1 bis A4 Pumpenansteuersignale ab. Der Ausgang A1 dient zur permanenten Einschaltung der Pumpe, z.B. zu Beginn des BASR-Modus; die Ausgänge A2 bis A4 liefern bestimmte Steuersignale für vorgegebene Pulsraster mit unterschiedlichem Pulsdauer-/Pulspausenverhältnis.

Die verschiedenen Pulsraster werden in Figur 2 als "TAKT1..3", das Dauer-Einschaltsignal als "permanent" bezeichnet. Zur Bildung der Pulsraster ist ein Taktgenerator 15 vorgesehen, an dessen Ausgängen A5, A6, A7 die vorgegebenen Pulsraster bzw. Pulsdauer-/Pulspausenfolgen zur Verfügung stehen. Über UND-Gatter 17 bis 19, und über ein ODER-Gatter 20 wird ein Leistungstreiber 21 und schließlich eine Hydraulikpumpe 22 angesteuert; im Ausführungsbeispiel nach Figur 1 symbolisiert 22 den Motor 7 des Motorpumpenagregates 5. Die Drehzahl der Pumpe 22 oder ein entsprechendes Schwellwertsignal wird einem Wandler 23 zugeführt, der ein drehzahlproportionales Signal in einem Komparator 24 mit einem vorgegbenen Sollwert $U_{soll}$, hier mit einer bestimmten Spannung, vergleicht. Der Ausgang des Komparators 24 führt schließlich zurück zur Pumpensteuerlogik 14, nämlich zu deren Eingang $n_{ist}$.

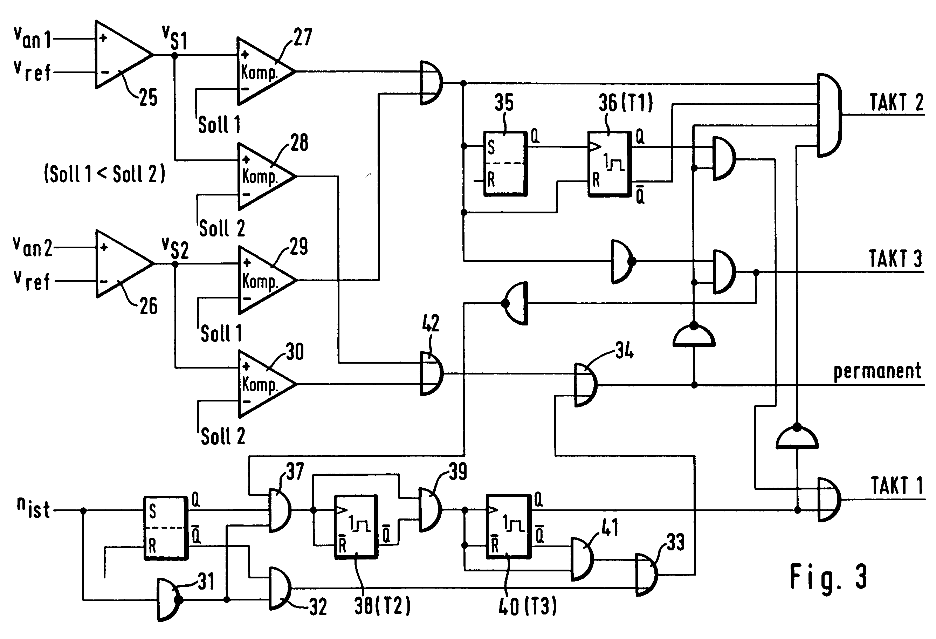

Den inneren Aufbau eines Ausführungsbeispiels der Pumpensteuerlogik 14, hier in Form eines festverdrahteten Schaltkreises, erläutert Figur 3. In diesem Ausführungsbeispiel sind zur Pumpensteuerung zwei Schlupfschwellen Soll1, Soll2 und ein Signal als Information über die Pumpendrehzahl-Schwelle $n_{ist}$ vorgegeben.

Mit Komparatoren 25, 26 wird zunächst radindividuell der Antriebsschlupf der angetriebenen Räder $v_{S1}$, $v_{S2}$ ermittelt. Anschließend wird in weiteren Komparatoren 27 bis 30 der Schlupf mit den vorgegebenen Schwellwerten Soll1, Soll2 verglichen, wobei die Schlupfschwelle Soll2 einem im Vergleich zu Soll1 höheren Antriebsschlupf entspricht.

Die Pumpensteuerlogik nach Figur 3 enthält außer den Komparatoren und den Logik-Elementen einige bistabile und monostabile Schaltkreise, die ein bestimmtes Zeitraster bei der Pumpenansteuerung festlegen. Im einzelnen sind folgende logischen Verknüpfungen und Zeitvorgaben der Figur 3 zu entnehmen:

Zu Beginn eines BASR-Modus, solange die Pumpendrehzahl noch nicht den vorgegebenen Schwellwert erreicht hat (d.h. $n_{ist}$ = 0), wird die Hydraulikpumpe "permanent" angesteuert. Über einen Konverter 31, ein UND-Gatter 32, ODER-Gatter 33 sowie über ein ODER-Gatter 34 wird in diesem Fall die Pumpe ununterbrochen angesteuert.

Die Daueransteuerung wird beibehalten, bis die Drehzahlschwelle erreicht ist und folglich $n_{ist}$ = 1 gilt.

Wenn der Schlupf an einem oder an beiden angetriebenen Rädern, also $v_{S1}$ und/oder $v_{S2}$, über der Schlupfschwelle Soll1, jedoch unter der Schlupfschwelle Soll2 liegt, und wenn diese Bedingung zum erstenmal eintritt, wird durch Ansteuern der monostabilen Stufe 36 über die bistabile Stufe 35 für eine vorgegebene Zeitspanne T1, die in der Größenordnung von 400 bis 800 Millisekunden liegen kann (hier wurde T1 = 600 Millisekunden gewählt), die Pumpe mit einem Pulsraster TAKT1 angesteuert. Bei diesem Pulsraster sind Pulsdauer bzw. Einschaltzeiten und Pulspausen gleichlang; in einem Ausführungsbeispiel wurden je 14 Millisekunden für Pulsdauer und Pulspause gewählt. Sinkt nun nach dem Ansteuern der Pumpe mit TAKT1 die Drehzahl unter den Schwellwert ab, so daß wiederum $n_{ist}$ = 0 gilt, schaltet das System nach Ablauf einer vorgegebenen Zeitspanne T2 + T3 (z.B. T2 + T3 = 800 Millisekunden ) auf die Daueransteuerung (permanent) zurück; die Daueransteuerung wird fortgesetzt, bis der Drehzahlschwellwert wieder überschritten ist. Die Wartezeit T2 + T3 wird in diesem Fall durch die Ansteuerung der beiden monostabilen Stufen 38 (T2) und 40 (T3) über UND-Gatter 37, 39 und 41 sowie über die ODER-Gatter 33 und 34 erreicht.

Nach Ablauf der Wartezeit T1 (z.B. T1 = 600 Millisekunden) wird die Pumpe, wenn der Schlupf $v_{S1}$, $v_{S2}$ an mindestens einem Rad über dem unteren Schlupfschwellwert Soll1 liegt, mit dem Pulsraster TAKT2 angesteuert. In diesem Modus beträgt das Verhältnis Pulspause zu Pulsdauer etwa 2 zu 1; die Pumpenförderleistung wird also reduziert. Sinkt nun die Pumpendrehzahl unter den Schwellwert für eine Zeitspanne, die größer ist als T2 (z.B. T2 = 400 Millisekunden), wird die Ansteuerung der Pumpe auf das Pulsraster TAKT1 zurückgeschaltet. Bleibt die Drehzahl für T3 (z.B. T3 = 400 Millisekunden) unter der Schwelle, wird nun die Pumpe solange ununterbrochen angesteuert, bis die Drehzahlschwelle überschritten ist ($n_{ist}$ = 1). Eine weitere Reduzierung der Pumpenleistung durch Umschalten der Ansteuerung auf das Pulsraster TAKT3 wird herbeigeführt, wenn der Antriebsschlupf beider Räder unter die untere Schlupfschwelle Soll1 absinkt.

Sobald der Antriebsschlupf $v_{S1}$, $v_{S2}$ eines der beiden Räder über den oberen Schwellwert Soll2 ansteigt, wird grundsätzlich die Pumpe über die ODER-Gatter 42 und 34 auf Dauerlauf (permanent) geschaltet. Des weiteren ist aus der Pumpensteuerlogik noch zu erkennen, daß immer dann, wenn die Pumpendrehzahl unter dem Schwellwert liegt ($n_{ist}$ = 0) und die durch die monostabilen Zeitglieder 38 und 40 vorgegebenen Wartezeiten T2 und T3 abgelaufen sind, die Pumpe mit voller Leistung (permanent) eingeschaltet wird. Gleichzeitig wird eine (nicht dargestellte) Überwachung gestartet, die nach einer weiteren Wartezeit von z.B. 200 Millisekunden die Regelung abschaltet, wenn innerhalb dieser Wartezeit die Pumpen-Drehzahlschwelle ($n_{ist}$ = 1) nicht erreicht wurde; im letzteren Fall wird ein Defekt in der Pumpenansteuerung vermutet.

Das Pulsraster TAKT3 setzt sich aus Einschaltzeiten (Pulsdauer) von 28 Millisekunden und Pulspausen von 4facher Dauer (112 Millisekunden) zusammen.

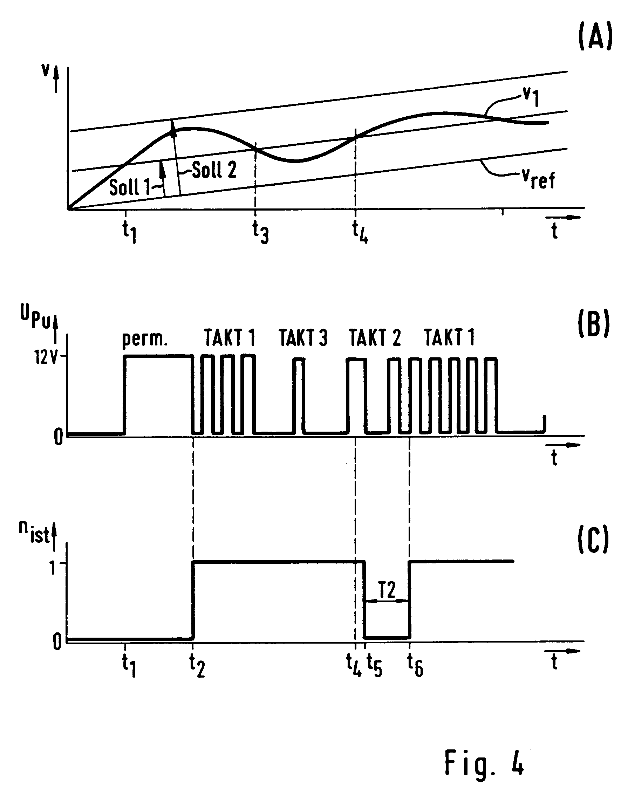

Figur 4 veranschaulicht die Arbeitsweise der Bremsanlage nach der Erfindung. Im Diagramm (A) sind die Geschwindigkeit $v_1$ eines angetriebenen Rades (also $v_{an1}$ oder $v_{an2}$) während eines Anfahrvorganges und die Fahrzeugreferenzgeschwindigkeit $v_{ref}$, die als Bezugsgröße zur Schlupfregelung dient, wiedergegeben. Außerdem sind zwei Antriebsschlupfschwellen Soll1 und Soll2, in Form von Parallelen zur Referenzgeschwindigkeit $v_{ref}$, dargestellt.

Die von dem Schlupf und von der Pumpenmotor-Drehzahl abhängigen Pulsraster "permanent", TAKT1, TAKT2, TAKT3 und die Drehzahl-Schwellenerkennung über der Zeit zeigen die Kurven (B) und (C).

Dem Diagramm nach Figur 4 liegt folgender Anfahrvorgang zugrunde:
Zum Zeitpunkt $t_1$ überschreitet das beobachtete Rad - es ist das schnellere der beiden angetriebenen Räder eines Fahrzeuges ($v_{an1}$ oder $v_{an2}$) - die untere Schlupfschwelle Soll1. Die Bremsen-Antriebsschlupfregelung (BASR) setzt ein. Die Hilfsdruckversorgung wird eingeschaltet, doch liegt zunächst die Drehzahl der Pumpe noch unter der Drehzahl-Schwelle; es gilt $n_{ist}$ = 0. Folglich wird die Pumpe durch ein Dauersignal (permanent) angesteuert. Zum Zeitpunkt $t_2$ erreicht die Pumpe die Drehzahlschwelle ($n_{ist}$ = 1), so daß nun das Pulsraster TAKT1 zur Wirkung gelangt. Das Unterschreiten der Schlupfschwelle Soll1 führt zum Zeitpunkt $t_3$ zur Umschaltung des Pulsrasters auf TAKT3. Das erneute Ansteigen des Antriebsschlupfes über den Schwellwert Soll1 zum Zeitpunkt $t_4$ führt zur Umschaltung auf das Pulsraster TAKT2, solange die Drehzahlschwelle der Pumpe noch überschritten ist. Da in dieser Situation der TAKT2 bzw. die entsprechenden Einschaltzeiten der Pumpe zum Aufrechterhalten einer über der Schwelle ($n_{ist}$) liegenden Drehzahl nicht ausreichen, und die Pumpendrehzahl zum Zeitpunkt $t_5$ unter den Schwellwert ($n_{ist}$) absinkt, wird zum Zeitpunkt $t_6$ erneut die Einschaltzeit der Pumpe im Vergleich zu den Pulspausen erhöht. Dies geschieht durch Zurückschalten auf TAKT1, allerdings erst nach Ablauf einer vorgegebenen Verzögerungszeit T2 von z.B. 400 Millisekunden; usw.. Auf diese Weise wird die Pumpenförderleistung genau dem tatsächlichen Bedarf angepaßt.

## Patentansprüche

1. Hydraulische Bremsanlage mit Blockierschutzregelung, im folgenden ABS genannt, und Antriebsschlupfregelung durch Bremseneingriff, im folgenden BASR genannt, die eine elektromotorisch angetriebene Hydraulikpumpe zur Hilfsdruckversorgung im ABS- und BASR-Modus besitzt, mit Sensoren zur Ermittlung des Raddrehverhaltens und mit einer elektronischen Schaltung zur Auswertung der Sensorsignale und zur Erzeugung von Bremsdruck- und Hilfsdrucksteuersignalen, dadurch **gekennzeichnet,**

   daß die Hydraulikpumpe (6,6',22) im BASR-Modus zumindest zeitweise durch eine Pulsfolge angesteuert wird,
   daß durch Modulation der Pulsfolge die Förderleistung der Pumpe (6,6') dem Bedarf in der jeweiligen Situation und unter den jeweiligen Bedingungen angepaßt wird und
   daß der Bedarf durch Auswertung des Antriebsschlupfes der angetriebenen Räder und der momentanen Drehzahl der Hydraulikpumpe (6,6',22) ermittelt wird.

2. Bremsanlage nach Anspruch 1, dadurch **gekennzeichnet,** daß das Überschreiten von vorgegebenen Antriebsschlupfschwellen (Soll1, Soll2) festgestellt und als Maß für den Bedarf an Pumpenförderleistung ausgewertet wird.

3. Bremsanlage nach Anspruch 1 oder 2, dadurch **gekennzeichnet,** daß das Überschreiten von vorgegebenen Antriebsschlupf-Schwellwerten (Soll1, Soll2) und eines oder von mehreren, vorgegebenen Pumpendrehzahlschwellwerten ($n_{ist}$) als Maß für den Bedarf an Pumpen-Förderleistung und zur Einstellung der Ansteuer-Pulsfolge ausgewertet wird.

4. Bremsanlage nach einem oder mehreren der Ansprüche 1 bis 3, dadurch **gekennzeich-net,** daß in Abhängigkeit von vorgegebenen Schlupf- und Motordrehzahl-Schwellwerten (Soll1, Soll2, $n_{ist}$) das Pulsdauer/Pulspausen-Verhältnis und/oder die Frequenz der Ansteuer-Pulsfolge eingestellt wird.

5. Bremsanlage nach einem oder mehreren der Ansprüche 1 bis 4, dadurch **gekennzeich-net,** daß mehrere Pulsraster (TAKT 1-4, Perm.) in Form von Pulsfolgen mit vorgegebenem Pulsdauer- und Pulspausenzeiten gebildet werden und daß der Pumpenmotor (7, M) in Abhängigkeit von dem ermittelten, aktuellen Bedarf bzw. von dem Überschreiten oder Unterschreiten der Antriebsschlupf- und/oder Motordrehzahl-Schwellwerte (Soll1, Soll2, $n_{ist}$) mit einem bestimmten Pulsraster (Perm., TAKT 1-4) angesteuert wird.

**6.** Bremsanlage nach Anspruch 5 dadurch **gekennzeichnet,** daß der Antriebsschlupf durch Vergleich der Geschwindigkeit ($v_1$) der angetriebenen Räder mit der Fahrzeuggeschwindigkeit oder Fahrzeugreferenzgeschwindigkeit ($v_{ref}$) ermittelt und radindividuell mit zwei vorgegebenen Antriebsschlupf-Schwellwerten (Soll1, Soll2) verglichen wird und daß diese Antriebsschlupf-Schwellwerte und ein Motordrehzahl-Schwellwert ($n_{ist}$) zur Festlegung des jeweiligen Pumpenansteuerungs-Pulsrasters (Perm., TAKt 1-4) dienen, wobei das Überschreiten und Unterschreiten der Schlupfschwellwerte (Soll1, Soll2) und/oder das Erreichen des Drehzahlschwellwertes ($n_{ist}$) in Abhängigkeit von der Pumpenansteuerung ausgewertet werden.

**7.** Bremsanlage nach einem oder mehreren der Ansprüche 1 bis 6, dadurch **gekennzeich-net,** daß die Reaktion der Pumpenmotor-Drehzahl auf die Pumpenansteuerung oder auf die Änderung des Ansteuer-Pulsrasters (Perm., TAKT 1-4) ermittelt und zur Anpassung des Ansteuer-Pulsrasters an den Bedarf und/oder zur Überwachung und Fehlererkennung ausgewertet wird.

**8.** Bremsanlage nach Anspruch 7, dadurch **gekennzeichnet,** daß die Reaktion der Pumpenmotor-Drehzahl auf die Pumpenansteuerung nach vorgegebenen Zeitspannen ermittelt und ausgewertet wird.

**Claims**

**1.** Hydraulic brake system having anti-lock control, hereinbelow referred to as ABS, and traction slip control by brake management, hereinbelow referred to as BASR, including an electromotively driven hydraulic pump for the auxiliary pressure supply in the ABS and BASR modes, sensors to determine the wheel rotational behavior, and an electronic circuit for analyzing the sensor signals and generating braking pressure control signals and auxiliary pressure control signals, **characterized** in that the hydraulic pump (6, 6', 22), in the BASR mode, is activated by a pulse train at least temporarily, in that the flow rate of the pump (6, 6') is adjusted to the requirements in the respective situation and under the prevailing conditions by modulation of the pulse train, and in that the requirements are determined by analyzing the traction slip of the driven wheels and the instantaneous rotational speed of the hydraulic pump (6, 6', 22).

**2.** Brake system as claimed in claim 1, **characterized** in that the exceeding of predetermined traction slip thresholds (Soll1, Soll2) is discovered and analyzed as a standard of the required pump flow rate.

**3.** Brake system as claimed in claim 1 or claim 2, **characterized** in that the exceeding of predetermined traction slip threshold values (Soll1, Soll2) and one or more predetermined threshold values of the rotational pump speed ($n_{ist}$) is analyzed as a standard of the required pump flow rate and for adjusting the activation pulse train.

**4.** Brake system as claimed in any one or more of the claims 1 to 3, **characterized** in that the ratio of pulse times and times of pulse break and/or the frequency of the activation pulse train is adjusted in response to predetermined threshold values of slip and rotational motor speed (Soll1, Soll2, $n_{ist}$).

**5.** Brake system as claimed in any one or more of the claims 1 to 4, **characterized** in that several pulse patterns (TAKT 1-4, perm.) are formed by pulse trains with predetermined pulse times and times of pulse break, and in that the pump motor (7, M) is activated by a predetermined pulse pattern (perm., TAKT 1-4) in response to the actual requirements found or the exceeding or falling short of the threshold values of traction slip and/or rotational motor speed (Soll1, Soll2, $n_{ist}$).

**6.** Brake system as claimed in claim 5, **characterized** in that the traction slip is determined by comparing the speed ($v_1$) of the driven wheels with the vehicle speed or the vehicle reference speed ($v_{ref}$), and is compared individually for each wheel with two predetermined traction slip threshold values (soll1, Soll2), and in that these traction slip threshold values and a threshold value of the rotational motor speed ($n_{ist}$) serve to determine the respective pulse pattern for the pump activation (perm., TAKT 1-4), while the exceeding and falling short of the slip threshold values (Soll1, Soll2) and/or the attaining of the rotational speed threshold value ($n_{ist}$) is analyzed in response to the pump activation.

**7.** Brake system as claimed in any one or more of the claims 1 to 6, **characterized** in that the reaction of the rotational speed of the pump motor to the pump activation or to the variation of the pulse pattern of the activation (perm., TAKT 1-4) is determined and analyzed to adjust the activation pulse pattern to the requirements and/or for monitoring and error detection.

**8.** Brake system as claimed in claim 7, **characterized** in that the reaction of the rotational speed of the pump motor to the pump activation after predetermined intervals is determined and analyzed.

## Revendications

1. Système de freinage hydraulique à régulation anti-blocage, appelée ci-après ABS, et régulation du glissement de traction avec intervention du frein, appelée ci-après BASR, qui comporte une pompe hydraulique à entraînement par moteur électrique et servant à l'alimentation en pression auxiliaire en mode ABS et mode BASR, comprenant des capteurs, servant à relever le comportement des roues en rotation, et un circuit électronique servant à exploiter les signaux de capteur et à produire des signaux de commande de pression de freinage et de pression auxiliaire,
   caractérisé

   en ce que, dans le mode BASR, la pompe hydraulique (6, 6', 22) est commandée, au moins par moments, au moyen d'un train d'impulsions,
   en ce qu'au moyen d'une modulation du train d'impulsions, le débit de la pompe (6, 6') est adapté au besoin se présentant dans la situation de chaque instant et dans les conditions de chaque instant et
   en ce que le besoin est déterminé au moyen d'une exploitation du glissement de traction des roues motrices et de la vitesse de rotation, instantanée, de la pompe hydraulique (6, 6', 22).

2. Système de freinage selon la revendication 1, caractérisé en ce que le franchissement vers le haut de seuils de glissement de traction (Soll1, Soll2) préfixés est déterminé et est exploité en tant que mesure pour le besoin en débit de pompe.

3. Système de freinage selon la revendication 1 ou 2, caractérisé en ce que le franchissement vers le haut de valeurs de seuil de glissement de traction (Soll1, Soll2) préfixées et d'une ou plusieurs valeurs de seuil de vitesse de rotation de pompe ($n_{ist}$) préfixées est exploité en tant que mesure concernant le besoin en débit de pompe et pour le réglage du train d'impulsions de commande.

4. Système de freinage selon une ou plusieurs des revendications 1 à 3, caractérisé en ce que le rapport de durées impulsion/intervalle et/ou la fréquence du train d'impulsions de commande sont réglés en fonction des valeurs de seuil de glissement et valeurs de seuil de vitesse de rotation de moteur (Soll1, Soll2, $n_{ist}$) préfixées.

5. Système de freinage selon une ou plusieurs des revendications 1 à 4, caractérisé en ce que plusieurs bases d'impulsions (TAKT 1-4, Perm.) se présentant sous forme de trains d'impulsions à durée d'impulsion et durée d'intervalle pré-fixées sont formés et en ce que le moteur de pompe (7, M) est commandé au moyen d'une base d'impulsions (Perm., TAKT 1-4) déterminée, en fonction du besoin instantané déterminé, plus précisément du franchissement vers le haut ou du franchissement vers le bas des valeurs de seuil de glissement de traction et/ou valeurs de seuil de vitesse de rotation de moteur (Soll1, Soll2, $n_{ist}$).

6. Système de freinage selon la revendication 5, caractérisé en ce que le glissement de traction est établi par comparaison de la vitesse ($v_1$) des roues motrices à la vitesse de véhicule ou vitesse de référence de véhicule ($v_{ref}$) et est comparé, individuellement pour chaque roue, à deux valeurs de seuil de glissement de traction (Soll1, Soll2) préfixées et en ce que ces valeurs de seuil de glissement de traction et une valeur de seuil de vitesse de rotation de moteur ($n_{ist}$) servent pour établir la base d'impulsions de commande de pompe (Perm., TAKT 1-4) de chaque instant, tandis que le franchissement vers le haut et le franchissement vers le bas des valeurs de seuil de glissement (Soll1, Soll2) et/ou le fait que la valeur de seuil de vitesse de rotation ($n_{ist}$) est atteinte sont exploités en fonction de la commande de pompe.

7. Système de freinage selon une ou plusieurs des revendications 1 à 6, caractérisé en ce que la réaction de la vitesse de rotation de moteur de pompe à la commande de pompe ou à la modification de la base d'impulsions de commande (Perm., TAKT 1-4) est relevée et est exploitée pour l'adaptation de la base d'impulsions de commande au besoin et/ou pour la surveillance et la reconnaissance de défaillance.

8. Système de freinage selon la revendication 7, caractérisé en ce que la réaction de la vitesse de rotation de moteur de pompe à la commande de pompe est relevée après des périodes de temps préfixées et est exploitée.

# Fig. 1

Fig. 2

Fig. 3

Fig. 4